# FASCICULE DE BREVET EUROPEEN

(11) **EP 2 142 418 B1**
(45) Date de publication et mention de la délivrance du brevet: **02.03.2011**
(21) Numéro de dépôt: 08775736.5
(22) Date de dépôt: 21.03.2008
(51) Int. Cl.: B62D 25/20

(54) **PLANCHER DE VEHICULE AUTOMOBILE INCLUANT UN SUPPORT ET VEHICULE AUTOMOBILE COMPORTANT UN TEL PLANCHER**
BODEN FÜR EIN AUTOMOBIL MIT EINEM HALTER UND AUTOMOBIL MIT EINEM SOLCHEN BODEN
FLOOR FOR AUTOMOBILE INCLUDING A HOLDER AND AUTOMOBILE INCLUDING SUCH FLOOR

(30) Priorité: 27.04.2007 FR 0703088
(43) Date de publication de la demande: 13.01.2010
(73) Titulaire: Peugeot Citroën Automobiles SA, 78140 Vélizy-Villacoublay (FR)
(72) Inventeur: TALLET, Frédéric, F-70250 Ronchamp (FR); BLAISE, Vincent, F-25260 Lougre (FR)
(86) Numéro de dépôt international: PCT/FR2008/050498
(87) Numéro de publication internationale: WO 2008/135686

(56) Documents cités:
- FR-A- 2 878 222

## Description

La présente invention concerne un plancher de véhicule automobile incluant un support et un véhicule automobile comportant un tel plancher. En particulier, l'invention se rapporte à la conception d'un plancher pour un véhicule utilitaire tel qu'une fourgonnette.

Un plancher de véhicule automobile inclut généralement un plancher d'habitacle et un plancher de coffre situés respectivement à l'avant et à l'arrière du véhicule. Le plancher d'habitacle est destiné à recevoir les sièges ou banquettes pour le conducteur et pour le ou les passager(s) avant. Un plancher d'habitacle comporte en général une partie droite, une partie gauche et un renfort intermédiaire parfois dénommé "tunnel", car il s'étend longitudinalement entre ces parties et il s'élève au-dessus de celles-ci en présentant généralement une section en forme de "U" renversé. Les parties droite et gauche ainsi que la partie supérieure du renfort sont globalement planes. Les côtés droit et gauche sont définis par rapport au sens d'avance du véhicule.

Un plancher de coffre comprend généralement une partie arrière qui s'étend jusqu'à l'extrémité arrière du véhicule, c'est-à-dire jusqu'au niveau de l'ouvrant arrière constitué par exemple par un hayon ou par des portes. Cette partie arrière du plancher de coffre est globalement plane et son altitude est supérieure à celle du plancher d'habitacle.

Du côté du plancher d'habitacle, un plancher de coffre comprend en outre une partie avant dont la géométrie dépend du type de véhicule. Ainsi, dans les véhicules utilitaires de l'art antérieur, le plateau constituant la partie arrière du plancher de coffre s'étend également sur la partie avant du plancher de coffre et jusqu'au plancher d'habitacle. Dans ce cas, le plancher d'habitacle et le plancher de coffre sont séparés par une marche qui se trouve à proximité de l'emplacement réservé aux sièges et/ou banquette pour le conducteur et pour le ou les passager(s) avant. Lorsque les sièges avant sont montés sur le plancher d'habitacle, le plateau formant le plancher de coffre s'étend depuis l'extrémité arrière du véhicule jusque vers les sièges avant.

Le plancher de coffre d'un véhicule particulier de l'art antérieur est construit différemment, de façon à recevoir les sièges et/ou banquette arrière. Dans ce cas, la partie avant du plancher de coffre présente une géométrie adaptée au montage des sièges arrière et elle se trouve globalement à une altitude inférieure à celle de la partie arrière du plancher de coffre. Les parties avant et arrière du plancher de coffre sont séparées par une marche et la partie arrière est moins longue que celle d'un véhicule utilitaire.

Or, ces constructions différentes des planchers de coffre d'un véhicule particulier de type berline et d'un véhicule utilitaire imposent la production de deux séries de pièces distinctes à un constructeur automobile souhaitant proposer une gamme de véhicule déclinée en une version berline et une version utilitaire. Par conséquent, une telle gamme présente des coûts de production augmentés.

Pour palier à cet inconvénient, il est connu du document FR-A-2878222 un plancher d'habitacle selon le préamble de la revendication 1, coopérant avec un support destiné à recevoir un prolongateur de plancher de coffre.

Par ailleurs, les véhicules utilitaires de l'art antérieur nécessitent l'installation de plusieurs composants distincts pour orienter les câbles de freins à main, pour maintenir et fixer le cadre de protection du conducteur et des passagers avant, pour maintenir et fixer l'enrouleur de la ceinture de sécurité centrale L'installation de composants distincts pour remplir ces fonctions multiplie donc les coûts de fabrication et de main d'oeuvre.

La présente invention vise notamment à remédier à ces inconvénients en proposant un support pour plancher de véhicule automobile permettant de simplifier la construction d'un véhicule et de faciliter la déclinaison d'une gamme de véhicules selon des versions berline et utilitaire.

A cet effet, l'invention concerne un plancher de véhicule automobile incluant
- un plancher d'habitacle qui comprend une partie droite, une partie gauche et un renfort s'étendant longitudinalement entre les parties droite et gauche et s'élevant au-dessus de celles-ci ; et
- un plancher de coffre qui comprend une partie arrière surélevée par rapport au plancher d'habitacle ;

Selon l'invention, le plancher de coffre comprend en outre un prolongateur globalement plan et horizontal s'étendant devant la partie arrière et partiellement au-dessus du plancher d'habitacle, et le plancher de véhicule comprend en outre un support fixé sur le renfort et pourvu de moyens de soutien du prolongateur, et le support comprend deux montants sensiblement verticaux, une entretoise solidaire de chaque montant et les moyens de soutien sont formés par deux plaques s'étendant, lorsque le support est fixé sur le renfort, sensiblement horizontalement et respectivement depuis chaque montant, de façon à présenter une surface d'appui pour un prolongateur de la partie arrière d'un plancher de coffre.

Selon d'autres caractéristiques avantageuses mais facultatives de l'invention, prises isolément ou selon toute combinaison techniquement possible :
- le plancher de véhicule comprend, en outre, deux supports latéraux situés de chaque côté du plancher d'habitacle et deux traverses s'étendant respectivement entre le support et chacun des supports latéraux ;
- chaque montant présente une languette située sous l'entretoise et adaptée pour venir en appui sur le renfort du plancher d'habitacle ;
- l'entretoise comporte une languette adaptée pour s'appuyer sur le renfort ;
- le support comprend, en outre, des moyens pour maintenir un enrouleur de ceinture de sécurité et des moyens pour maintenir un cadre de protection du conducteur et/ou d'un passager, préalablement à leurs fixations respectives sur le support ;
- les moyens pour maintenir un enrouleur de ceinture de sécurité et/ou les moyens pour maintenir un cadre de protection comprennent des découpes susceptibles de coopérer avec des ergots complémentaires prévus sur l'enrouleur de ceinture et/ou sur le cadre de protection ;
- le support comprend au moins un orifice destiné au passage de câbles de frein à main ;
- le support est réalisé au moyen d'opérations de pliage, de découpage, d'emboutissage, de soudage et/ou de brasage d'une plaque métallique.

Par ailleurs, l'invention a trait à un véhicule automobile de type utilitaire comportant un plancher tel qu'exposé ci-dessus.

L'invention sera bien comprise et d'autres avantages de celle-ci apparaîtront aussi à la lumière de la description qui va suivre et des dessins annexés dans lesquels :
- la figure 1 est une vue en perspective d'un plancher de véhicule automobile conforme à l'invention, muni d'un support conforme à l'invention et équipé d'un siège ;
- la figure 2 est une vue partiellement éclatée de la figure 1 ;
- la figure 3 est une vue en perspective d'une partie du plancher de la figure 1 ;
- la figure 4 est une coupe partielle selon le plan IV à la figure 2;
- la figure 5 est une vue en perspective d'un support conforme à l'invention, lié à divers composants du véhicule automobile ; et
- la figure 6 est une vue en perspective du support de la figure 4 sous un angle différent.

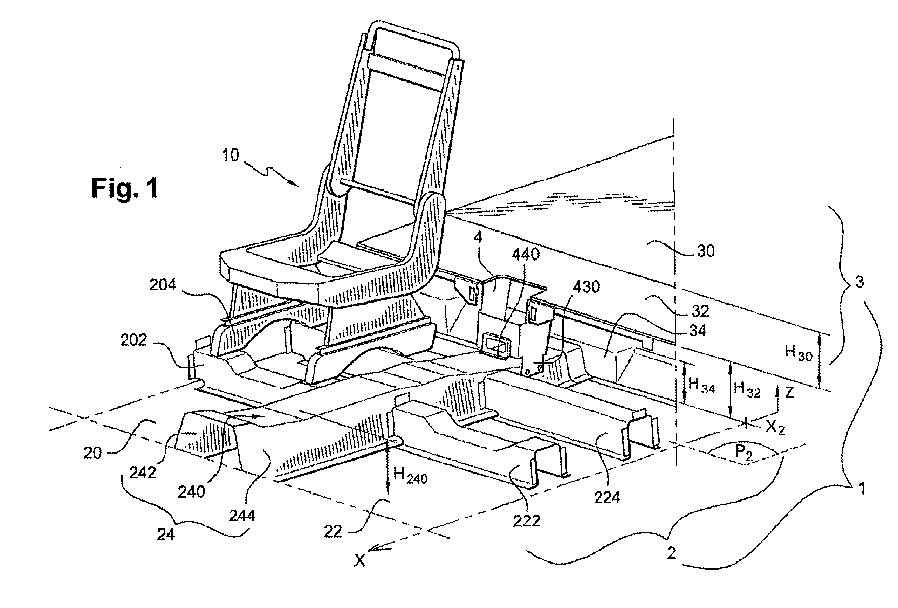

La figure 1 illustre une partie d'un plancher 1 de véhicule automobile, incluant un plancher d'habitacle 2 et un plancher de coffre 3.

Le plancher d'habitacle 2 comprend une partie droite 20 et une partie gauche 22 s'étendant globalement dans un plan P₂ horizontal. Sur chaque partie, droite 20 ou gauche 22, sont montées deux traverses parallèles entre elles et sensiblement perpendiculaires à l'axe longitudinal X du véhicule, respectivement 202 et 204 ainsi que 222 et 224. Les traverses 202, 204, 222 et 224 permettent la fixation au plancher 2 d'une banquette et/ou de sièges, tel que le siège du passager avant droit 10.

Le plancher 2 comprend en outre un renfort médian 24 qui s'étend selon l'axe X et entre les parties droite 20 et gauche 22. Le renfort médian 24 présente une section transversale en forme de "U" renversé. Le renfort médian 24 est donc formé de deux montants latéraux 242 et 244 et d'un plateau supérieur 240 sensiblement parallèle au plan P₂ contenant les parties droite 20 et gauche 22. La face supérieure du plateau 240 est tournée vers l'habitacle du véhicule. Le renfort médian 24 s'étend ici sur toute la longueur des parties droite 20 et gauche 22. Le plateau 240 se trouve à une hauteur H₂₄₀ au-dessus du plan P₂ qui correspond sensiblement à la hauteur du sol de l'habitacle après finition. Les hauteurs sont mesurées selon un axe Z perpendiculaire au plan P₂.

Le plancher de coffre 3 comprend une partie arrière 30 globalement plane et horizontale. La partie arrière 30 est surélevée par rapport au plancher d'habitacle 2 d'une hauteur H₃₀ déterminée pour permettre un accès ergonomique au volume du coffre par l'arrière du véhicule mais aussi pour créer avec le plancher 2 une marche, parfois qualifiée de planche à talon, qui améliore le confort des passagers.

Dans le cas de la figure 1, qui est typiquement le cas d'un véhicule utilitaire, le plancher de coffre 3 comprend en outre un prolongateur 32 globalement plan et horizontal qui s'étend devant la partie arrière 30 et partiellement au-dessus du plancher d'habitacle 2. Le prolongateur 32 s'étend donc, selon l'axe X, en avant de la limite X₂ séparant les planchers d'habitacle 2 et de coffre 3. Le prolongateur 32 se trouve à un hauteur H₃₂ sensiblement égale à la hauteur H₃₀ de la partie arrière 30.

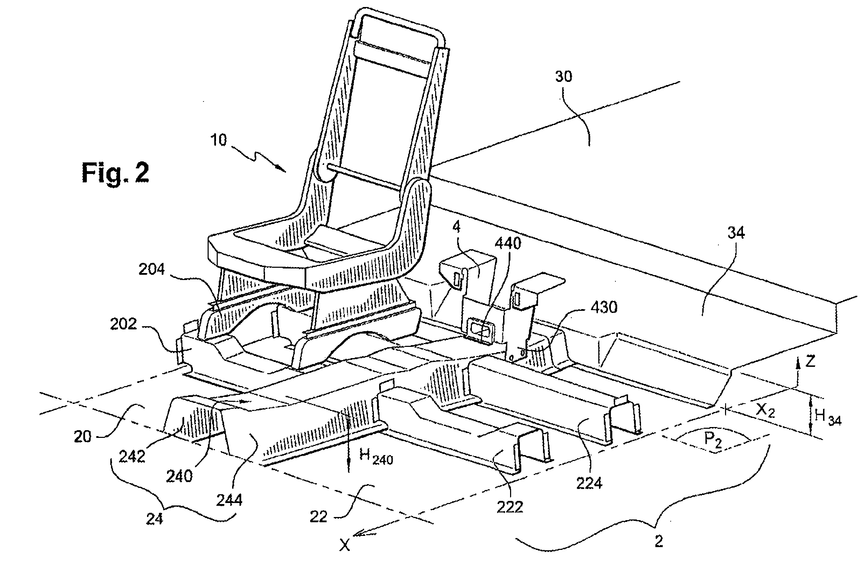

Le prolongateur 32 recouvre la partie avant 34 du plancher de coffre 3, laquelle s'étend, selon les axes X et Z, entre le plancher d'habitacle 2 et la partie arrière 30. La partie avant 34 est notamment destinée à recevoir les sièges et/ou la banquette arrière pour réaliser un véhicule automobile de type voiture particulière. La figure 2 montre la partie avant 34 dépourvue du prolongateur 32.

Le prolongateur 32 remplit donc la fonction de plancher de charge, ce qui permet d'augmenter la surface utile du plancher de coffre d'un véhicule de type utilitaire. Pour résister aux charges susceptibles d'être entreposées sur le prolongateur 32, le plancher 1 inclut en outre, en son milieu, un support 4 sur lequel repose le prolongateur 32. Le support 4 prend appui sur le plateau 240 et il est fixé au renfort 24 par tout moyen approprié. Les efforts appliqués sur le prolongateur 32 sont donc transmis par le support 4 au renfort 24.

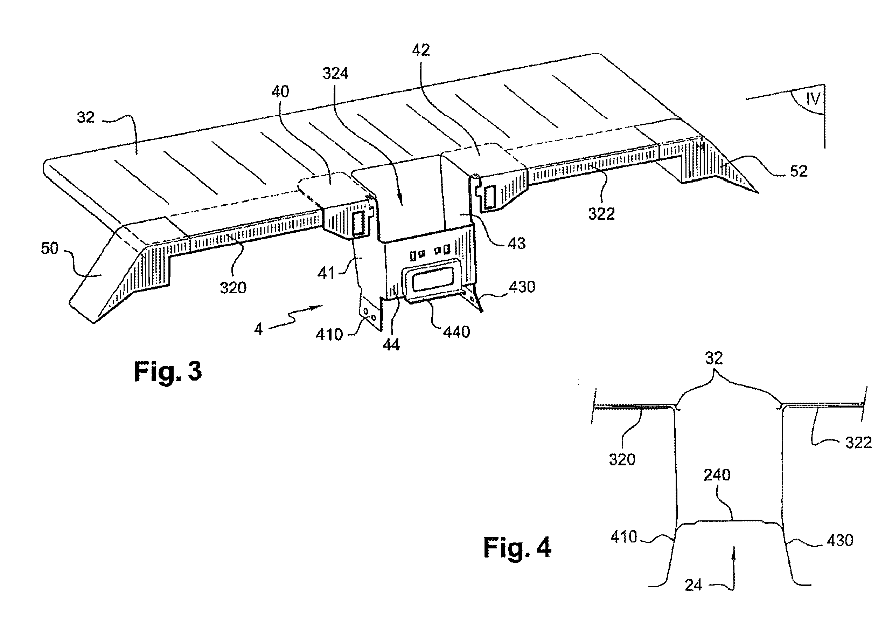

Comme le montrent les figures 3 et 4, le prolongateur 32 repose sur deux plaques globalement horizontales, droite 40 et gauche 42, appartenant au support 4. Les plaques 40 et 42 forment ainsi des moyens de soutien du prolongateur 32. De plus, le prolongateur 32 prend appui sur deux supports latéraux, droit 50 et gauche 52, lesquels sont fixés à la structure du plancher 1 et/ou du châssis du véhicule lors du ferrage. De préférence chaque support latéral est soudé au longeron, plus particulièrement à une cloison intérieure non représentée formant une partie du longeron.

Le prolongateur 32 prend en outre appui sur deux traverses, droite 320 et gauche 322 qui s'étendent entre le dessous de la plaque 40 ou 42 et le support latéral 50 ou 52 de leurs côtés respectifs. Les traverses 320 et 322 peuvent alternativement être rapportées respectivement sur les plaques 40 et 42. Vers l'arrière, le prolongateur 32 prend appui sur la partie arrière 30. Le prolongateur 32 est soudé sur la partie arrière 30 le long d'une ligne transversale de soudure qui est connue des véhicules particuliers puisqu'elle se trouve être sensiblement identique à celle réalisée pour souder une traverse de fixation de siège sur le plancher arrière 30.

Ainsi supporté, le prolongateur 32 est en mesure de résister aux charges qu'il reçoit en transmettant les efforts qu'elles engendrent, d'une part, à la partie arrière 30 et, d'autre part, aux traverses 320 et 322 ainsi qu'aux supports central 4 et latéraux 50 et 52. L'assemblage des traverses 320 et 322 aux supports central 4 et latéraux 50 et 52, ainsi que la solidarisation du prolongateur 32 sur cet ensemble peuvent être réalisés par soudage, par clinchage, par vissage et/ou par collage.

Les composants du plancher d'habitacle 2 peuvent être constitués de tôles métalliques mises en forme par des opérations de pliage, d'emboutissage, d'hydroformage ou autres. Les composants du plancher de coffre peuvent être réalisés de la même façon. Le prolongateur 32 peut alternativement être constitué d'une pièce en matériau synthétique chargé en fibres de renfort. Les parties arrière 30 et avant 34 peuvent être monobloc. L'assemblage des composants du plancher d'habitacle 2 entre eux et avec la partie avant 34 peut être effectué au moyen d'opérations de soudage, de collage, de vissage et/ou autres.

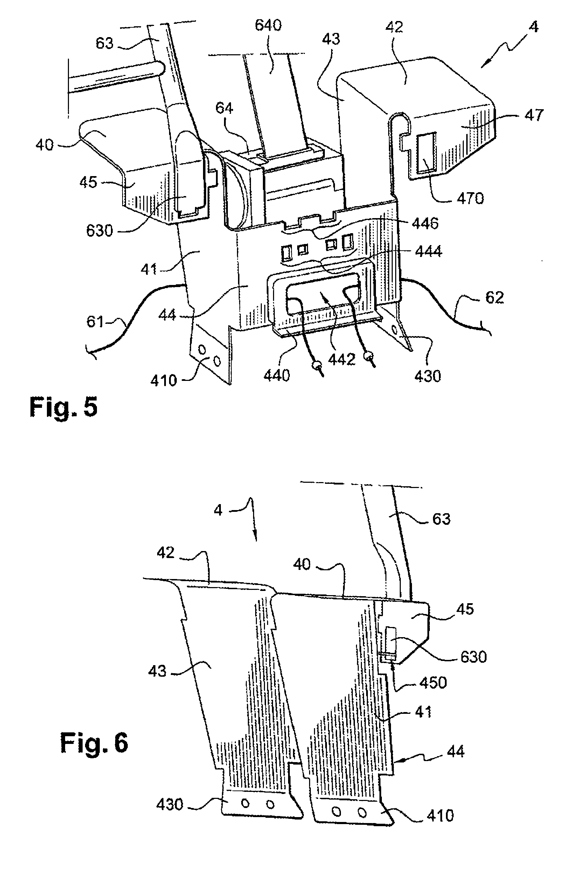

Les figures 4 et 5 illustrent la structure du support 4 et ses liaisons avec des composants permettant de remplir diverses fonctions.

Le support 4 comprend un montant droit 41 et un montant gauche 43 solidarisés entre eux par une entretoise 44. Les montants 41 et 43 sont ici constitués par des tôles minces s'étendant chacune dans un plan sensiblement vertical et parallèle à l'axe X. L'entretoise 44 est également formée par une tôle mince s'étendant transversalement aux montants 41 et 43.

Le support 4 est adapté pour être fixé sur le renfort médian 24. En l'occurrence, chacun des montants 41 et 43 présente une languette sensiblement verticale, respectivement droite 410 et gauche 430, qui peut être apposée sur le montant latéral correspondant 242 ou 244 du renfort médian 24. Les languettes verticales 410 et 430 sont situées sous l'entretoise 44 et leur écartement transversal est déterminé de façon à plaquer les languettes verticales 410 et 430 respectivement sur les montants droit 242 et gauche 244 du renfort médian 24.

Les languettes 410 et 430 sont ensuite solidarisées aux montants 242 et 244 au moyen de cordons de brasure ou de cordons de soudure réalisés au travers de chaque boutonnière ménagée au niveau de la languette verticale 410 ou 430. La matière qui permet de réaliser chaque cordon de soudure, est par exemple de l'acylester-styrène-acryinitrile, plus connu sous l'acronyme A.S.A.. Un tel procédé permet en effet de conférer une résistance mécanique élevée, notamment à l'arrachement, à un cordon de longueur réduite.

De plus, l'entretoise 44 comporte une languette 440 sensiblement horizontale et adaptée pour venir en appui sur la face supérieure du plateau 240. La languette 440 est ensuite solidarisée au plateau 240 au moyen d'un cordon de soudure ou par la réalisation de points de soudure électrique.

Les brasures et la soudure des languettes verticales 410 et 430 et horizontale 440 peuvent, si besoin, être remplacées ou complétées par des vis.

Les moyens de soutien du prolongateur 32 que constituent les plaques 40 et 42 se trouvent en partie haute du support 4. Les plaques 40 et 42 sont ici obtenues par un pliage à la perpendiculaire des tôles formant chacun des montants 41 et 43. Le support 4 remplit sa fonction de support du prolongateur 32 par l'intermédiaire des plaques 40 et 42, grâce auxquelles sont fixés le prolongateur 32 et chacune des traverses 320 et 322.

Par ailleurs, l'entretoise 44 présente, en partie haute, des orifices 444 et des découpes 446 destinées à permettre l'accrochage et le maintien d'un enrouleur 64 de ceinture de sécurité 640. Les orifices 444 et les découpes 446 reçoivent des parties mâles complémentaires prévues sur l'enrouleur 64. Ces parties mâles comportent des moyens de fixation, tels qu'une tige filetée, permettant de solidariser l'enrouleur 64 sur l'entretoise 44, par exemple au moyen d'écrous complémentaires qui sont, à titre d'exemple, disposés solidaires à l'enrouleur.

Le prolongateur 32 présente ici globalement a forme d'un rectangle dont la largeur correspond sensiblement à celle du véhicule et qui présente, dans sa partie médiane antérieure, un évidement rectangulaire dédié au passage de la ceinture de sécurité 640. Le prolongateur 32 peut alternativement être dépourvu d'un tel évidement lorsqu'il n'est pas nécessaire de faire passer une ceinture de sécurité.

La ceinture de sécurité 640 peut servir à attacher un passager avant situé au milieu de l'habitacle dans le cas où le véhicule comprend une banquette. La ceinture de sécurité 640 peut alternativement servir à attacher le passage assis sur le siège 10 à droite du conducteur.

La géométrie de l'enrouleur est sélectionnée pour orienter la ceinture de sécurité en fonction du passager attaché. Lors des opérations de montage de l'enrouleur 64, celui-ci est maintenu sur l'entretoise 44 grâce à la coopération de ses ergots avec les orifices 444 et les découpes 446, puis solidarisé à l'entretoise 44 par exemple par vissage.

De même, dans le cas de l'équipement d'un véhicule utilitaire, le support 4 comprend des moyens pour maintenir un cadre 63 de protection du conducteur et/ou du passager préalablement à sa fixation sur le support 4. En l'occurrence, ces moyens sont formés par des ailes, droite 45 et gauche 47 munies chacune d'un poinçonnage, respectivement 450 et 470, apte à recevoir une partie mâle complémentaire prévue sur le cadre 63.

Les ailes 45 et 47 s'étendent dans un plan sensiblement vertical et perpendiculaire à l'axe X et elles sont obtenues par des opérations de pliage et de découpage des tôles formant respectivement les piliers 41 et 43 ainsi que les plaques 40 et 42. Les ailes 45 et 47 s'étendent sur la partie antérieure de chacune des plaques 40 et 42 pour permettre la fixation des cadres de type 63 au plus près des sièges avant de l'habitacle.

Le cadre 63 comporte une patte 630 adaptée pour se plaquer contre l'aile 45 en introduisant un ergot dans le poinçonnage 450. Cela permet de maintenir en place le cadre 63 au cours de son opération de fixation sur le support 4 et sur la structure du véhicule. L'ergot de la patte 630 peut ainsi prendre appui sur le fond du poinçonnage 450 tandis que le cadre 63 est soudé ou vissé dans l'habitacle.

Par ailleurs, l'entretoise 44 présente une ouverture 442 destinée au passage de câbles 61 et 62 de frein à main. Il convient en effet de guider ces derniers dans leur cheminement à travers la partie avant du véhicule.

Le support 4 permet ainsi de remplir de multiples fonctions se rapportant à la construction du plancher du véhicule ou à l'équipement de son habitacle. Le support sert ainsi de "pilier de pont" pour le prolongateur 32 du plancher de coffre d'un véhicule utilitaire. Le support permet donc de décliner un plancher de coffre en une version berline ou en une version utilitaire avec une partie arrière 30 commune. Les coûts d'étude, d'outillage et de main-d'oeuvre, notamment pour les opérations de logistique, d'emboutissage et de ferrage, peuvent donc être réduits.

De plus, le support remplit les fonctions de fixation d'un enrouleur de ceinture de sécurité et d'un cadre de protection et de guidage de câbles de frein à main, fonctions qui étaient assurées dans l'art antérieur par autant de composants rapportés. Cette intégration fonctionnelle permet de réduire les investissements d'emboutissage, de logistique et les coûts de matières.

En outre, le support facilite les opérations de montage en permettant un maintien de certains composants préalablement à leurs fixations respectives. Cela permet donc de réduire les coûts de main-d'oeuvre ou d'augmenter la cadence de production.

D'autre part, le support présente l'avantage d'être polyvalent, car il peut être monté dans toutes les versions de véhicules, telles que les véhicules équipés de banquettes ou de sièges individuels, ainsi que dans les véhicules pourvus d'une direction à gauche ou à droite, puisqu'il est rendu possible de monter un cadre de protection du conducteur sur l'aile droite 45 ou l'aile gauche 47 du support.

## Revendications

1. Plancher (1) de véhicule automobile incluant :
- un plancher d'habitacle (2) qui comprend une partie droite (20), une partie gauche (22) et un renfort (24) s'étendant longitudinalement (X) entre les parties droite (20) et gauche (22) et s'élevant (H₂₄₀) au-dessus de celles-ci ; et
- un plancher de coffre (3) qui comprend une partie arrière (30) surélevée (H₃₀) par rapport au plancher d'habitacle (2),
le plancher de coffre (3) comprenant en outre un prolongateur (32) globalement plan et horizontal s'étendant devant la partie arrière (30) et partiellement au-dessus (H₃₂) du plancher d'habitacle (2), le plancher (1) du véhicule comprenant en outre un support (4) fixé sur le renfort (24) et pourvu de moyens (40, 42) de soutien du prolongateur (32),
ledit plancher (1) de véhicule étant **caractérisé en ce que** le support (4) comprend deux montants (41, 43) sensiblement verticaux, une entretoise (44) solidaire de chaque montant (41, 43) et **en ce que** les moyens de soutien sont formés par deux plaques (40, 42) s'étendant, lorsque le support (4) est fixé sur le renfort (24), sensiblement horizontalement et respectivement depuis chaque montant (41, 43), de façon à présenter une surface d'appui pour le prolongateur (32) de la partie arrière (30) du plancher de coffre (3).

2. Plancher selon la revendication 1, **caractérisé en qu'**il comprend deux supports latéraux (50, 52), situés de chaque côté du plancher d'habitacle (2), et deux traverses (320, 322) s'étendant respectivement entre le support (4) et chacun des supports latéraux (50, 52).

3. Plancher selon la revendication 1 ou 2, **caractérisé en ce que** chaque montant (41, 43) présente une languette (410, 430) située sous l'entretoise (44) et adaptée pour venir en appui sur le renfort (24) du plancher d'habitacle (2).

4. Plancher selon l'une des revendications 1 à 3, **caractérisé en ce que** l'entretoise (44) comporte une languette (440) adaptée pour s'appuyer sur le renfort (24).

5. Plancher selon l'une quelconque des revendications précédentes, **caractérisé en ce que** le support (4) comprend, en outre, des moyens (444, 446) pour maintenir un enrouleur (64) de ceinture de sécurité (640) et des moyens (450, 470) pour maintenir un cadre (63) de protection du conducteur et/ou d'un passager, préalablement à leurs fixations respectives sur le support (4).

6. Plancher selon la revendication 5, **caractérisé en ce que** les moyens (444, 446) pour maintenir un enrouleur (64) de ceinture de sécurité (640) et/ou les moyens (450, 470) pour maintenir un cadre de protection (63) comprennent des découpes susceptibles de coopérer avec des ergots complémentaires prévus sur l'enrouleur (64) de ceinture (640) et/ou sur le cadre de protection (63).

7. Plancher selon l'une quelconque des revendications précédentes, **caractérisé en ce que** le support (4) comprend au moins un orifice (442) destiné au passage de câbles de frein à main (61, 62).

8. Plancher selon l'une quelconque des revendications précédentes, **caractérisé en ce que** le support (4) est réalisé au moyen d'opérations de pliage, de découpage, d'emboutissage, de soudage et/ou de brasage d'une plaque métallique.

9. Véhicule automobile de type utilitaire comportant un plancher conforme à l'une quelconque des revendications précédentes.

## Claims

1. A floor (1) for an automotive vehicle including:
- a passenger compartment floor (2) which comprises a right portion (20), a left portion (22) and a stiffener (24) longitudinally extending (X) between the right (20) and left (22) portions and rising (H₂₄₀) above these; and
- a trunk floor (3) which comprises a rear portion (30) raised (H₃₀) relative to the passenger compartment floor (2),
the trunk floor (3) further comprising an extension (32) generally planar and horizontal extending in front of the rear portion (30) and partly above (H₃₂) the passenger compartment floor (2), the floor (1) of the vehicle further comprising a bracket (4) fastened to the stiffener (24) and provided with means (40, 42) for supporting the extension (32),
said floor (1) of the vehicle being **characterized in that** the bracket (4) comprises two substantially vertical posts (41, 43), a spacer (44) integral with each post (41, 43) and **in that** the supporting means are formed by two plates (40, 42) extending, when the bracket (4) is fastened to the stiffener (24), substantially horizontally and respectively from each post (41, 43), so as to have a bearing surface for the extension (32) of the rear portion (30) of the trunk floor (3).

2. The floor according to claim 1, **characterized in that** it comprises two side brackets (50, 52), located either side of the passenger compartment floor (2), and two crosspieces (320, 322) extending between the bracket (4) and each of the side brackets (30, 32), respectively.

3. The floor according to claim 1 or 2, **characterized in that** each post (41, 43) has a tab (410, 430) located under the spacer (44) and adapted to bear against the stiffener (24) of the passenger compartment floor (2).

4. The floor according to any of claims 1 to 3, **characterized in that** the spacer (44) has a tab (440) adapted to bear against the stiffener (24).

5. The floor according to any of the preceding claims, **characterized in that** the bracket (4) further comprises means (444, 446) for maintaining a safety belt (640) winder (64) and means (450, 470) for maintaining a frame (63) for protecting the driver and/or a passenger, before they are respectively fastened to the bracket (4).

6. The floor according to claim 5, **characterized in that** the means (444, 446) for maintaining a safety belt (640) winder (64) and/or the means (450, 470) for maintaining a protecting frame (63) comprise cutouts capable of cooperating with complementary lugs provided on the belt (640) winder (64) and/or on the protecting frame (63).

7. The floor according to any of the preceding claims, **characterized in that** the bracket (4) comprises at least one port (442) for providing space to the parking break cables (61, 62).

8. The floor according to any of the preceding claims, **characterized in that** the bracket (4) is made using operations for bending, cutting, stamping, welding and/or brazing a metal plate.

9. A commercial type automotive vehicle having a floor in accordance with any of the preceding claims.

## Patentansprüche

1. Kraftfahrzeugboden (1), umfassend:
- einen Fahrgastzellenboden (2), der einen rechten Teil (20), einen linken Teil (22) und eine Verstärkung (24), die sich längsseitig (X) zwischen dem rechten (20) und linken (22) Teil erstreckt und sich oberhalb dieser erhebt (H₂₄₀), umfasst; und
- einen Kofferraumboden (3), der einen hinteren Teil (30) umfasst, der im Verhältnis zu dem Fahrgastzellenboden (2) angehoben (H₃₀) ist,
wobei der Kofferraumboden (3) ferner eine insgesamt ebene und waagerechte Verlängerung (32) umfasst, die sich vor dem hinteren Teil (30) und teilweise oberhalb (H₃₂) des Fahrgastzellenbodens (2) erstreckt, wobei der Boden (1) des Fahrzeugs ferner einen Träger (4) umfasst, der an der Verstärkung (24) befestigt ist und mit Mitteln (40, 42) zur Abstützung der Verlängerung (32) versehen ist,
wobei der Fahrzeugboden (1) **dadurch gekennzeichnet ist, dass** der Träger (4) zwei im Wesentlichen senkrechte Ständer (41, 43) und einen Steg (44), der mit jedem Ständer (41, 43) fest verbunden ist, umfasst, und dass die Stützmittel von zwei Platten (40, 42) gebildet sind, die sich, wenn der Träger (4) an der Verstärkung (24) befestigt ist, im Wesentlichen waagerecht und jeweils von jedem Ständer (41, 43) aus erstrecken, derart, dass sie eine Auflagefläche für die Verlängerung (32) des hinteren Teils (30) des Kofferraumbodens (3) aufweisen.

2. Boden nach Anspruch 1, **dadurch gekennzeichnet, dass** er zwei Seitenträger (50, 52), die sich auf jeder Seite des Fahrgastzellenbodens (2) befinden, und zwei Querstreben (320, 322), die sich jeweils zwischen dem Träger (4) und jedem der Seitenträger (50, 52) erstrecken, umfasst.

3. Boden nach Anspruch 1 oder 2, **dadurch gekennzeichnet, dass** jeder Ständer (41, 43) eine Lasche (410, 430) aufweist, die sich unter dem Steg (44) befindet und dazu geeignet ist, um auf der Verstärkung (24) des Fahrgastzellenbodens (2) zur Auflage zu kommen.

4. Boden nach einem der Ansprüche 1 bis 3, **dadurch gekennzeichnet, dass** der Steg (44) eine Lasche (440) umfasst, die dazu geeignet ist, auf der Verstärkung (24) aufzuliegen.

5. Boden nach einem der vorhergehenden Ansprüche, **dadurch gekennzeichnet, dass** der Träger (4) ferner Mittel (444, 446) zum Festhalten einer Aufrollvorrichtung (64) für Sicherheitsgurte (640) und Mittel (450, 470) zum Festhalten eines Rahmens (63) zum Schutz des Fahrers und/oder eines Fahrgastes, ehe sie jeweils an dem Träger (4) befestigt werden, umfasst.

6. Boden nach Anspruch 5, **dadurch gekennzeichnet, dass** die Mittel (444, 446) zum Festhalten einer Aufrollvorrichtung (64) für Sicherheitsgurte (640) und/oder die Mittel (450, 470) zum Festhalten eines Schutzrahmens (63) Ausschnitte umfassen, die für das Zusammenwirken mit komplementären Vorsprüngen vorgesehen sind, die auf der Aufrollvorrichtung (64) für Sicherheitsgurte (640) und/oder dem Schutzrahmen (63) vorgesehen sind.

7. Boden nach einem der vorhergehenden Ansprüche, **dadurch gekennzeichnet, dass** der Träger (4) mindestens eine Öffnung (442) umfasst, die für den Durchlass von Handbremsseilen (61, 62) vorgesehen ist.

8. Boden nach einem der vorhergehenden Ansprüche, **dadurch gekennzeichnet, dass** der Träger (4) mit Hilfe von Vorgängen des Biegens, Schneidens, Tiefziehens, Schweißens und/oder Lötens einer Metallplatte ausgebildet ist.

9. Kraftfahrzeug vom Typ eines Nutzfahrzeugs mit einem Boden nach einem der vorhergehenden Ansprüche.
